(19) Europäisches Patentamt
European Patent Office
Office européen des brevets

(11) Veröffentlichungsnummer: **0 030 594**
**B1**

(12) # EUROPÄISCHE PATENTSCHRIFT

(45) Veröffentlichungstag der Patentschrift: **29.09.82**

(21) Anmeldenummer: **80106201.9**

(22) Anmeldetag: **11.10.80**

(51) Int. Cl.³: **C 09 D 3/76,** C 09 D 5/42, C 09 D 5/40, C 08 L 23/08, C 08 L 79/00 // (C08L23/08, 31/04)

(54) **Pulverförmige Beschichtungsmaterialien und deren Verwendung.**

(30) Priorität: **27.10.79 DE 2943469**

(43) Veröffentlichungstag der Anmeldung: ***24.06.81 Patentblatt 81/25***

(45) Bekanntmachung des Hinweises auf die Patenterteilung: **29.09.82 Patentblatt 82/39**

(84) Benannte Vertragsstaaten: **BE DE FR GB NL**

(56) Entgegenhaltungen:
**AT-B- 288 566**
**DE-A- 2 819 827**

(73) Patentinhaber: **BAYER AG, Zentralbereich Patente, Marken und Lizenzen, D-5090 Leverkusen 1, Bayerwerk (DE)**

(72) Erfinder: **Resz, Raoul, Dr., Buchenkampsweg 10, D-5060 Bergisch-Gladbach 3 (DE)**
Erfinder: **Schäfer, Walter, Dr., Wolfskaul 6, D-5000 Köln 80 (DE)**
Erfinder: **El Sayed, Aziz, Dr., Jaegerstrasse 34, D-5090 Leverkusen 1 (DE)**

EP 0 030 594 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Pulverförmige Beschichtungsmaterialien

Die Erfindung betrifft pulverförmige, bei Temperaturen oberhalb des Schmelzpunktes aushärtende Beschichtungsmaterialien auf Basis von verseiften Ethylen-Vinylacetat-Copolymeren und vernetzend wirkenden Zusatzstoffen sowie die damit hergestellten Beschichtungen.

Verseifte Ethylen-Vinylacetat-Copolymere, welche vor der Verseifung Ethylen und Vinylacetat in Molverhältnissen von 2:1 bis 20:1 einpolymerisiert enthalten und die bis zu einem Hydrolysegrad von mehr als 50% verseift sind, eignen sich zum Beschichten von Gegenständen aus Metall, Keramik, Glas, Kunstoff und Holz nach den verschiedenen bekannten Techniken der Tauch- und Spritzbeschichtungsverfahren, wie z.B. Wirbelsintern, Flammspritzen oder elektrostatischem Pulversprühverfahren (EPS) (vgl. AT-B- 288566). Die Anwendung dieser Beschichtungsmaterialien ist allerdings auf die Fälle beschränkt, wo eine Formbeständigkeit bei Temperaturen oberhalb des Erweichungs- bzw. Schmelzpunktes der daraus hergestellten Beschichtungen nicht erforderlich ist. In vielen Fällen ist eine Anwendung daher nicht möglich, z.B. wenn es um die Beschichtung von Metallrohren geht, welche heissen Flüssigkeiten ausgesetzt sind bzw. durch welche derartige Materialien gefördert werden, von Metallteilen, die sich in der Nähe von heissen Gegenständen oder Maschinenteilen befinden, oder auch von Mehrwegglasflaschen, welche eine Reinigung bei höheren Temperaturen (70 bis 90°C) aushalten müssen.

Es ist bekannt, dass durch Vernetzung von derartigen Copolymeren allgemein, insbesondere aber durch Zusatz von Verbindungen, welche bi- oder polyfunktionell mit den im Polymeren enthaltenen Hydroxylgruppen zu reagieren vermögen, unschmelzbare Polymerüberzüge erhalten werden können. Hierbei ist allerdings Vorbedingung, dass diese vernetzend wirkenden Verbindungen erst bei höheren Temperren, d.h. wesentlich oberhalb des Schmelzpunkter des Polymeren ihre Wirkung entfalten, d.h. dass sie, ohne vernetzend aktiv zu werden, in diese eingearbeitet werden können. Sie dürfen ferner bei der Lagerung des Beschichtungspulvers in Gegenwart von Luft bzw. von Luftfeuchtigkeit auch nach längerer Zeit nicht unwirksam werden. Als vernetzend wirkende Zusatzstoffe wurden bisher di- und polyfunktionelle Carbonsäuren, Carbonsäureanhydride, Carbonsäurechloride und Isocyanate sowie solche Verbindungen vorgeschlagen, welche bei der thermischen Zersetzung im Temperaturbereich von ca. 100 bis 250°C Isocyanatgruppen enthaltende Verbindungen freisetzen. Zu diesen letzteren Gruppen von Verbindungen gehören solche, welche unter Abspaltung von sogenannten Blockierungs- oder Verkappungsmitteln in Di- bzw. Polyisocyanate übergehen. Als Verkappungsmittel sind z.B. Phenole, Lactame, Oxime, Verbindungen mit aktiven Methylengruppen, Säureamide, Imidazol und einige seiner Derivate, Sulfite, Imine, Harnstoffe, Alkohole, Merkaptane, Imide und Amine geeignet. Gemeinsam für diese verkappten Isocyanate ist ihre Eigenschaft, beim Vernetzungsvorgang solche Verkappungsmittel abzuspalten, welche sich entweder bei der Vernetzungstemperatur verflüchtigen oder als unflüchtige, aber niedermolekulare Verbindungen in der Polymerschicht verbleiben. Die erstgenannten verursachen bei der Verarbeitung des Beschichtungspulvers eine mehr oder weniger starke Geruchsbelästigung, und viele dieser flüchtigen Substanzen sind auch gesundheitlich nicht unbedenklich. Leichtflüchtige Verkappungsmittel verursachen bei der Verarbeitung auch häufig Störungen durch Blasenbildung in der Kunststoffschicht, was für die Qualität der Beschichtungen sehr nachteilig ist. Schwerflüchtige, aber niedermolekulare Blockmittel sind andererseits mit den verseiften Ethylen-Vinylacetat-Polymeren häufig unverträglich, und sie üben eine ungünstige Wirkung auf die anwendungstechnischen Eigenschaften der Beschichtungen aus, und zwar insbesondere auf ihre Reissfestigkeit, Dichtigkeit, Lösungsmittelbeständigkeit, Oberflächenbeschaffenheit, Chemikalienbeständigkeit und ihre Haftfestigkeit auf den verschiedenen Untergründen, um nur einige zu nennen. Es besteht daher ein dringender Bedarf an vernetzend wirkenden Substanzen, welche bei der Vernetzungsreaktion keine niedermolekularen Blockmittel abspalten, sondern entweder in di- bzw. polyfunktionelle Verbindungen oder in ein Gemisch von solchen mit monofunktionell reagierenden Verbindungen zerfallen. Die ersteren bewirken oberhalb der Zersetzungstemperatur die gewünschte Vernetzung, wogegen die letzteren monofunktionell mit der Polymerkette zu reagieren vermögen und demzufolge in einem wesentlich geringeren Umfang beim Einbrennen der Beschichtung abgegeben werden bzw. als unflüchtige, aber mit Lösungsmitteln herauslösbare Beimengung in der Beschichtung verbleiben.

Es wurde gefunden, dass Polycarbodiimide der allgemeinen Formel 1:

$$A-R-[N=C=N-R]_x-A \qquad (1)$$

wobei R eine (Cyclo) Alkylen-, Aralkylen- oder Arylengruppe,
A eine mit einer zerewitinoffaktiven Verbindung geblockte Isocyanatgruppe oder auch Wasserstoff und
x eine ganze Zahl von 2 bis 20 bedeutet

in der Lage sind, bei höheren Temperatur unter Ausbildung von Strukturen der nachfolgenden Art

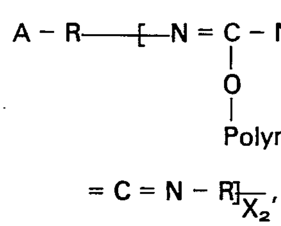

, wobei $X_1 + X_2 = 2$ bis 20

mit verseiften Ethylen-Vinylacetat-Copolymeren zu reagieren, welche vor der Verseifung in einem Molverhältnis von 2:1 bis 20:1 Ethylen und Vinylacetat enthalten und die bis zu einem Hydrolysegrad von über 50% verseift sind. Dabei bilden sich temperaturbeständige Beschichtungen auf Gegenständen aus Metall, Keramik, Glas, Holz oder Kunststoff. Die mit A bezeichneten Endgruppen sind hierbei vorzugsweise Wasserstoff oder solche geblockten Isocyanatgruppen, welche bei wesentlich höheren Temperaturen das Blockmittel abgeben als die Temperatur, bei welcher die oben angedeutete Reaktion verläuft. Sie können zwar auch solche mit niedrigeren Zersetzungstemperaturen sein, in ihrer Gegenwart wird aber im allgemeinen eine Vernetzung ohne Abgabe eines Blockmittels nicht vollständig erreicht, sondern überwiegend nur eine Verminderung der abgespaltenen Blockmittelmenge. Dies ist allerdings in vielen Fällen auch schon ein erheblicher Vorteil im Vergleich zu den üblichen bekannten geblockten Di- bzw. Polyisocyanaten der oben bereits erwähnten Art und bildet einen weiteren Gegenstand der vorliegenden Erfindung. Ausser den obengenannten Polycarbodiimiden sind auch geblockte Polycarbodiimide wie Polyuretoniminderivate, in welchen die Polycarbodiimidketten nach der Formel 2:

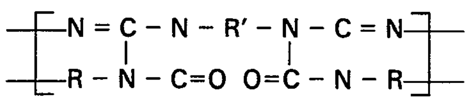

(2)

durch Einbau von organischen Diisocyanaten miteinander verbunden sind, als Vernetzungsmittel geeignet, da sie bei der thermischen Spaltung nicht nur vernetzungsaktive Polycarbodiimide ergeben, sondern da dabei gleichzeitig auch Isocyanatgruppen freigesetzt werden, welche dann noch eine zusätzliche Vernetzung der hydroxylgruppenhaltigen Polymeren bewirken.

Die erfindungsgemässen Polymervernetzerkombinationen, in Pulverform nach den oben erwähnten Beschichtungstechniken angewandt, geben unschmelzbare, im Vergleich zu den nicht vernetzten Materialien klarere, härtere, elastischere und kältefestere Beschichtungen. Sie müssen allerdings nach dem Ausschmelzen der Pulver in einer dieser nachgeschaltenen Verfahrensstufe bei erhöhten Temperaturen eingebrannt werden, wie dies bei nachhärtenden Einbrennlackierungen üblicherweise der Fall ist.

Die Beschichtungsmaterialien bestehen aus

a) 50 bis 99 Gew.% von verseiften Ethylen-Vinylacetat-Copolymeren, welche von der Verseifung Ethylen und Vinylacetat in Molverhältnissen von 2:1 bis 20:1 enthalten und welche bis zu Hydrolysegraden von 50 bis 100% verseift sind und

b) aus 1 bis 50 Gew.% von bei über 130°C vernetzend wirkenden Polycarbodiimiden der allgemeinen Formel 1:

$$A-R-[N=C=N-R]_x-A \quad (1)$$

in der R eine (Cyclo)Alkylen-, Aralkylen- oder Arylengruppe,

A Wasserstoff oder eine geblockte Isocyanatgruppe mit Abspalttemperaturen von mehr als 130°C und x eine ganze Zahl von 2 bis 20 bedeutet oder/und Polyuretoniminen, in welchen die wie oben angegeben aufgebauten Polycarbodiimidmoleküle entsprechend den allgemeinen Formeln 2 und 3

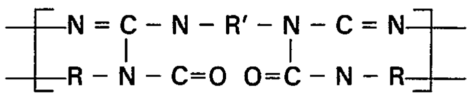

(2)

bzw.

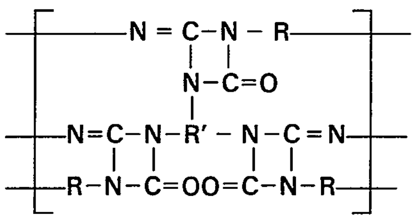

(3)

wobei R' ein zwei- oder dreiwertiger organischer Rest ist, durch Umsetzung mit (Cyclo)aliphatischen, araliphatischen oder aromatischen Di- bzw. Triisocyanaten miteinander verbunden sind. Die Polycarbodiimide der oben angegebenen allgemeinen Formel 1 werden aus Polyisocyanaten durch Erhitzen in Gegenwart von geeigneten Katalysatoren und durch Zugabe von zerewitinoffaktiven Verbindungen und/oder Monoisocyanaten erhalten. Ihre Herstellung ist z.B. beschrieben in den US-A Nr. 2941983 und 2041966 und „J. org. Chem." 28, 2069 (1963).

Für die erfindungsgemässen Beschichtungsmaterialien werden solche Polycarbodiimide bevorzugt, die Endgruppen A besitzen, die durch die Umsetzung einer zerewitinoffaktiven Verbindung mit einer Isocyanatgruppe entstehen. Besonders bevorzugt werden Polycarbodiimide, die mit Urethangruppen terminiert sind. Bevorzugt sind auch solche Polycarbodiimide, bei denen A ein Wasserstoffatom und -R-A der aliphatischem, araliphatische oder aromatische Rest eines Monoisocyanats ist. Diese terminierten Polycarbodiimide lassen sich dadurch herstellen, dass man vorzugsweise Diisocyanate mit oder ohne Lösungsmittel in Gegenwart von 0,001 bis 5 Gew.% eines Phosphor enthaltenen Carbodiimidisierungskatalysators auf eine Temperatur zwischen 25 und 250°C aufheizt.

Vor, während oder nach der Carbodiimidisierung werden dem Reaktionsgemisch noch Monoalkohole bzw. Monoisocyanate zugesetzt. Im Fall des Monoalkohols beträgt das Molverhältnis des Alkohols zum Diisocyanat 0,5 : 1 bis 0,1 : 1, im Fall des Monoisocyanats beträgt das Molverhältnis des Isocyanats zum Diisocyanat 1 : 1 bis 0,1 : 1. Das Gemisch wird auf 25 bis 250°C aufgeheizt, und mit Hilfe einer Gasuhr wird die $CO_2$-Entwicklung so lang gemessen, bis sie zum Erliegen gekommen ist. Anhand der $CO_2$-Menge lässt sich der Carbodiimidgehalt des Reaktionsprodukts bestimmen.

Die geblockten Polycarbodiimide, die Polyuretonimine, bilden sich infolge einer 2 + 2 Cycloaddition zwischen einer Isocyanat- und Carbodiimidgruppe bei Zugabe eines Isocyanats zum Polycarbodiimid, wobei besonders Kupfersalze katalytisch auf diese Ringbildung wirken. Die Herstellung von Uretoniminen ist bekannt und wird z.B. beschrieben in DE-B Nr. 1012602 und „J. org. Chem." 33, 1913, (1968).

Erfindungsgemäss bevorzugt werden Polyuretonimine, die dadurch entstehen, dass man ein Diisocyanat in Gegenwart von 0,001 bis 5 Gew.% eines Phosphor enthaltenden Carbodiimidisierungskatalysators so lange reagieren lässt, bis 40 bis 90% der Isocyanatgruppen umgesetzt sind (nachweisbar über die entwickelte Kohlendioxidmenge).

Das Reaktionsprodukt wird anschliessend 10 bis 60 min lang bei einer Temperatur von 70 bis 140°C belassen, gegebenenfalls in Gegenwart von 0,05 bis 1 Gew.% eines Ringbildungskatalysators, und dann abgekühlt. Es entstehen Produkte, die Uretonimingruppen oder auch noch Isocyanat- bzw. Carbodiimidgruppen enthalten können. Noch vorhandene Isocyanatgruppen werden dann bei Temperaturen von 0 bis 50°C mit zerewitinoffaktiven Verbindungen umgesetzt.

Als Ausgangsmaterialien zur Herstellung der Polycarbodiimide bzw. geblockten Polycarbodiimide (Polyuretonimine) können die an sich bekannten aliphatischen, cycloaliphatischen oder araliphatischen Polyisocyanate der Polyurethanchemie dienen, z.B.
1,4-Tetramethylendiisocyanat,
1,5-Pentamethylendiisocyanat,
1,6-Hexamethylendiisocyanat,
2,2,4- und 2,4,4-Trimethyl-1,6-diisocyanatohexan,
1,11-Undecamethylendiisocyanat,
1,12-Dodecamethylendiisocyanat,
1,2-Diisocyanatomethylcyclobutan,
1,4-Diisocyanatocyclohexan,
Dicyclohexyldiisocyanat,
Dicyclohexylmethan-4,4'-diisocyanat,
p- und m-Xylylendiisocyanat,
1-Methyl-2,4-diisocyanatocyclohexan,
1-Methyl-2,6-diisocyanatocyclohexan,
3-Isocyanatomethyl-3,5,5-trimethylcyclohexylisocyanat (= Isophorondiisocyanat),
α,ω-Diisocyanatocapronsäureester mit 1 bis 8 C-Atomen im Alkoholrest.
Ganz besonders geeignet sind alicyclische Isocyanate, wie z.B.
1-Isocyanato-3,3,5-trimethyl-5-isocyanatomethylcyclohexan,
Cyclohexan-1,4-diisocyanat,
4,4'-Diisocyanatodicyclohexylmethan,
2,4- und 2,6-Diisocyanato-1-methylcyclohexangemisch (Verhältnis 80:20).
Gut geeignet sind auch
Hexamethylendiisocyanat,
2,2,4- und 2,4,4-Trimethylhexamethylendiisocyanat,
Oxadiazintriongruppen und/oder Uretdiongruppen, Biuret- oder Isocyanuratgruppen enthaltende Polyisocyanate auf Hexamethylendiisocyanat- und 1-Isocyanato-3,3,5-trimethyl-5-isocyanatomethylcyclohexanbasis,
sowie auch Mischungen daraus.

Zur Herstellung der Polycarbodiimide bzw. geblockten Polycarbodiimide (Uretonimine) können auch Mischungen eingesetzt werden, die aus aliphatischen bzw. cycloaliphatischen Isocyanaten und aromatischen Isocyanaten bestehen.

Bevorzugte aromatische Diisocyanate sind z.B.: 1,3- und 1,4-Phenylendiisocyanat, 2,4- und 2,6-Toluylendiisocyanat sowie beliebige Gemische dieser Isomeren, Diphenylmethan-2,4' und/oder -4,4'-diisocyanat, Naphtylen-1,5-diisocyanat, Diisocyanate, wie sie in der amerikanischen Patentschrift Nr. 3492330 beschrieben werden; Allophanatgruppen aufweisende Polyisocyanate, wie sie z.B. in der britischen Patentschrift Nr. 994890, der belgischen Patentschrift Nr. 761626 und der veröffentlichten holländischen Patentanmeldung Nr. 7102524 beschrieben werden.

Es ist prinzipiell auch möglich, aliphatische Diisocyanate zu verwenden oder mitzuverwenden oder aromatische Diisocyanate mitzuverwenden, wie sie durch Umsetzung von überschüssigem Diisocyanat mit difunktionellen OH- oder NH-Gruppen tragenden Verbindungen entstehen und in der Praxis der Polyurethanchemie entweder als modifizierte Isocyanate oder als Isocyanatpräpolymere anzutreffen sind. Die Einbeziehung solcher abgewandelter Isocyanate ermöglicht, je nach Wahl der Kettenlänge oder der chemischen Natur der OH- und NH-Verbindungen, z.B. Glykol, Diglykol, Polyäther, Polycarbonate oder Polyester, die Herstellung weiterer Varianten der Polycarbodiimide. Zerewitinoffaktive Verbindungen, die als Ausgangsmaterial zur Herstellung der Polycarbodiimide und der geblockten Polycarbodiimide eingesetzt werden, sind z.B. Methanol, Äthanol, Cyclohexanol, Phenol, Mercaptan, Methylamin, Äthylamin, Butylamin, Dibutylamin, Cyclohexylamin, Anilin, 1,2,4-Triazol, ε-Caprolactam, Pyrrolidon, Malonsäurediethylester und Acetessigester.

Zerewitinoffaktive Verbindungen, die während oder nach der Carbodiimidisierung zugegeben werden, sind Verbindungen, die mit Isocyanatgruppen schneller reagieren als mit Carbodiimid- und Uretonimingruppen, beispielsweise Methanol, Äthanol, Cyclohexanol und Phenol.

Bevorzugt werden solche zerewitinoffaktiven Verbindungen eingesetzt, deren Umsetzungsprodukte mit Isocyanatgruppen sich erst bei Temperaturen über 180°C zersetzen, z.B. Methanol, Äthanol, Cyclohexanol, Methylamin, Äthylamin, Cyclohexylamin und Anilin.

Monoisocyanate, die als Ausgangsmaterial zur Herstellung der Polycarbodiimide eingesetzt werden, sind z.B. Hexylisocyanat, Cyclohexylisocyanat, Phenylisocyanat und Tolylisocyanat.

Der Uretonimingehalt des blockierten Polycarbodiimids lässt sich dadurch bestimmen, dass es auf 180°C aufgeheizt wird, wobei unter Spaltung einer Uretonimingruppe eine Carbodiimid- und eine Isocyanatgruppe freigesetzt werden. Das

Isocyanat wird dann wie üblich anhand des Verbrauchs von Di-n-butylamin erfasst.

Bei der Herstellung der erfindungsgemäss verwendenden Polyisocyanatocarbodiimidadditionsprodukte können als carbodiimidbildende Katalysatoren sämtliche üblicherweise zur Umwandlung von Isocyanat- in Carbodiimidgruppen verwendeten Katalysatoren eingesetzt werden. Beispiele hierfür sind Phosphor enthaltende Verbindungen wie Triphenylphosphinoxid, Phospholin- oder Phospholanoxide und deren Sulfide, Verbindungen, wie sie z.B. in den US-A Nrn 2663737, 2663738, 2663739 und 2853473 beschrieben werden.

Als Carbodiimidisierungskatalysator wird ein Gemisch aus 1-Methyl-1-phospha-2-cyclopenten-1-oxid und 1-Methyl-1-phospha-3-cyclopenten-1-oxid, das in Mengen von 0,1 bis 5 Gew.% zum Isocyanat zugegeben wird, bevorzugt. Die Reaktionstemperatur beträgt im allgemeinen 80 bis 250°C.

Die Herstellung der erfindungsgemäss zu verwendenden Polycarbodiimide wird bevorzugt in Lösungsmitteln wie z.B. Toluol, Xylol oder Decalin ausgeführt, kann aber auch in Substanz z.B. in einer Reaktionsschnecke erfolgen.

Aus Komponenten der erfindungsgemässen Polymerpulver werden solche verseiften Ethylen-Vinylacetat-Copolymere eingesetzt, welche vor der Verseifung Ethylen und Vinylacetat in Molverhältnissen von 2:1 bis 20:1, vorzugsweise 4:1 bis 10:1 enthalten und in denen die Acetylgruppen zu mehr als 50%, vorzugsweise zu 80 bis 100% verseift sind. Solche Polymere enthalten 67 bis 95, vorzugsweise 80 bis 91 Molprozent einpolymerisiertes Äthylen.

Die Ethylen-Vinylacetat-Copolymere können grundsätzlich nach allen bekannten Methoden, wie z.B. nach dem Substanz-Lösungs- und Emulsionspolymerisationsverfahren, hergestellt werden, vorzugsweise werden sie aber nach dem in der DE-C Nr. 1126613 beschriebenen Polymerisationsverfahren in einer überwiegend aus tert. Butanol bestehenden flüssigen Phase bei Drücken von unterhalb 800 bar, bevorzugt zwischen 200 bis 500 bar hergestellt.

Die Verseifung der zur Herstellung der erfindungsgemässen Beschichtungspulver eingesetzten Ethylen-Vinylacetat-Copolymere kann nach beliebigen bekannten Methoden in Gegenwart von alkalischen bzw. sauren Katalysatoren in Alkoholen erfolgen bzw. bei höheren Gehalten an einpolymerisiertem Ethylen in Gemischen von Alkoholen mit unter den Verseifungsbedingungen inerten Lösungsmitteln. Bevorzugt werden die Verseifung bzw. die Alkoholyse und die Isolierung der vernetzerhaltigen Polymeren in Pulverform nach der in der DE-A Nr. 2611548 beschriebenen Methode durchgeführt, da diese die gleichmässige Verteilung des Vernetzers im Polymerpulver durch eine gemeinsame Ausfällung der beiden Komponenten aus der Verseifungslösung in Wasser gestattet. Bei diesem Verfahren wird die Verseifung in einem organischen Lösungsmittelgemisch durchgeführt, welches die Eigenschaft besitzt, bei höheren Temperaturen das Verseifungsprodukt und den Vernetzer homogen zu lösen und anschliessend bei niedrigeren Temperaturen von ca. 30 bis 80°C zu gelieren. Dabei wird die gelierende Lösung in Wasser mechanisch zerkleinert und das dem Produkt anhaftende leichtflüchtige organische Lösungsmittel durch Wasserdampfdestillation entfernt.

Weitere Möglichkeiten zur Einarbeitung des Vernetzers in das verseifte Ethylen-Vinylacetat-Copolymere sind z.B. das Vermischen der beiden Komponenten in geschmolzenem Zustand oberhalb des Schmelzpunktes und unterhalb des Vernetzungspunktes, d.h. im Temperaturbereich von ca. 100 bis 150°C, und das Mahlen des erhaltenen Granulates, gegebenenfalls unter Verwendung von flüssigem Stickstoff als Kühlmittel. Eine andere brauchbare Methode besteht darin, dass man das Pulver des trockenen, verseiften Ethylen-Vinylacetat-Copolymerisates mit einer Lösung des Vernetzers in einem Lösungsmittel, welches das Polymerpulver zwar stark anquellen lässt, aber nicht löst, behandelt und das Produkt entweder direkt trocknet, oder aber mit Hilfe von Wasserdampfdestillation von den organischen Lösungsmitteln befreit und das wasserfeuchte Produkt trocknet.

Um die Eigenschaften der verseiften Ethylen-Vinylacetat-Copolymeren etwas zu modifizieren, z.B. deren Haftfestigkeit an gewissen Substratoberflächen zu verbessern, können diese geringfügig modifiziert, d.h. die darin enthaltenen freien Hydroxylgruppen bis zu einem gewissen Umfang, maximal bis zu ca. 25%, mit derartigen Verbindungen umgesetzt werden, welche die Einführung von freien Carboxygruppen mit sich bringen. Derartige Verbindungen sind z.B. cyclische Di- bzw. Tricarbonsäureanhydride wie Bernsteinsäureanhydrid, Glutarsäureanhydrid, Maleinsäureanhydrid, Phthalsäureanhydrid, Tetrahydrophthalsäureanhydrid, Hexahydrophtalsäureanhydrid und Trimellitsäureanhydrid. Auf die Polymeren können ferner in Gegenwart von radikalischen Polymerisationsinitiatoren, wie z.B. von organischen Peroxiden und Azoverbindungen, freie Carboxylgruppen enthaltende, ethylenisch ungesättigte Verbindungen aufgepfropft werden, wie z.B. Acrylsäure, Methacrylsäure, Itaconsäure, oder solche Verbindungen, welche durch eine hydrolytische Spaltung in vorgenannte Verbindungen übergehen, z.B. Maleinsäureanhydrid.

Die Menge der nach diesen Methoden eingeführten Carboxylgruppen sollte allerdings nur begrenzt sein, weil ihre Anwesenheit die Hydrophilie der Beschichtungen und ihre Alkaliempfindlichkeit zunehmend erhöht. Beim Einsatz der bei hohen Temperaturen freie Isocyanatgruppen freisetzenden Polyuretoniminderivate kann ausserdem eine mehr oder weniger unerwünschte starke Blasenbildung in der Beschichtung auftreten.

Da freie Carboxylgruppen mit Polycarbodiimiden wesentlich leichter reagieren als die Hydroxylgruppen, wird die Vernetzungstemperatur mit steigendem Carboxylgruppengehalt immer niedriger, zumal der hierbei entstehende Acylharnstoff als

Isocyanatabspalter zusätzlich Vernetzung bewirkt. Im ungünstigen Fall kann dies dazu führen, dass das Beschichtungsmaterial beim Aufschmelzen zu früh, d.h. noch vor dem glatten Verlauf reagiert. Die Folge davon sind ungleichmässige, wellige Beschichtungen.

Die Beschichtung kann nach allen bekannten Methoden der Pulverbeschichtungstechnik, wie z.B. nach dem Wirbelsinterverfahren, nach dem elektrostatischen Pulversprühverfahren, durch Flammspritzen oder Rotationsgiessen erfolgen, es ist jedoch erforderlich, dass nach dem Aufschmelzen der Beschichtung durch Erhitzen auf höhere Temperaturen das Material ausgehärtet wird. Hierzu sind im allgemeinen Temperaturen von 160 bis 220°C, vorzugsweise 180 bis 200°C und Einbrennzeiten von 5 bis 60, vorzugsweise von 10 bis 30 min erforderlich. Um die Haftfestigkeit des Polymeren am Untergrund zu erhöhen, ist es in vielen Fällen zweckmässig, eine Vorbehandlung der zu beschichtenden Fläche durchzuführen, und zwar entweder durch Aufbringen einer Haftschicht oder durch eine chemische Vorbehandlung. Besonders günstig für die feste Verankerung der Kunststoffbeschichtung ist die Verwendung von Primern, welche mit den Carbodiimidgruppen bzw. mit den bei der Zersetzung der Polyuretonimine freiwerdenden Isocyanatgruppen zu reagieren vermögen. Auf diese Art und Weise wird eine direkte chemische Verbindung zwischen der Beschichtung und dem Untergrund hergestellt. Gut geeignet für diesen Zweck sind z.B. die als Haftvermittler für Glas und Metall bekannten, reaktive Gruppen enthaltenden Alkyl-tris-Alkoxysilane. Beim Einsatz von Haftvermittlern muss allerdings ihre thermische Beständigkeit berücksichtigt werden, da sie sich bei mehr oder weniger hohen Temperaturen verändern bzw. zersetzen können und dann häufig statt als Haftvermittler als Trennmittel wirken. In vielen Fällen genügt für das Erzielen einer ausreichenden Haftung der Beschichtung an der Oberfläche des zu beschichtenden Gegenstandes eine gründliche Reinigung bzw. ein mechanisches Aufrauhen z.B. durch Sandstrahlen.

*Beispiel 1:*

A) *Herstellung des Polycarbodiimidvernetzers*

560 g Isophorondiisocynat werden mit 36 g Methanol, unter Zusatz von 0,1 g Zinn-di-2-äthylhexoat als Katalysator, in 2000 ml Xylol bei 45°C innerhalb von 2 h zur Reaktion gebracht. Nachdem dem Reaktionsgemisch 6,68 g 1-Methylphospholinoxid zugesetzt wurden, wird es so lange auf 137°C aufgeheizt, bis im IR-Spektrum keine Isocyanatbande mehr festzustellen ist. Nach dem Entfernen des Lösungsmittels am Rotationsverdampfer im Wasserstrahlvakuum erhält man ein zähes Harz.

B) *Herstellung des Beschichtungspulvers*

2500 g eines Äthylen-Vinylacetat-Copolymeren mit einem Gehalt von 32,0 Gew.% Vinylacetat, welches einem Äthylen-Vinylacetat-Molverhältnis von 6,5:1 entspricht, werden in 250 g trokkenem Toluol in einem Rührkessel bei ca. 80°C gelöst, und zu der auf ca. 60°C abgekühlten Lösung wird eine Lösung von 25 g Natriummethylat in 1300 g Methanol gelöst zugegeben. Das Reaktionsgemisch wird 1 h am Rückfluss gekocht. Dann werden mit einer Geschwindigkeit von 24 Volumenteilen/h insgesamt 1200 ml Destillat über eine Füllkörperkolonne abdestilliert. Der Umesterungskatalysator wird dann durch Zusatz von 2,5 Gewichtsteilen Wasser zerstört. Zu der so erhaltenen klaren Lösung wird die Lösung von 250 g des im Teil A dieses Beispiels hergestellten Vernetzers, in der dreifachen Gewichtsmenge Toluol gelöst, zugegeben. Nachdem die beiden Lösungen homogen vermischt sind, wird die warme Lösung nach dem in der DE-A Nr. 2611548 beschriebenen Verfahren bei ca. 55°C in Wasser suspendiert und das anhaftende organische Lösungsmittelgemisch durch Destillation mit Wasserdampf unter vermindertem Druck von ca. 100 mm Hg entfernt. Das in Form eines groben Pulvers erhaltene Material wird abfiltriert und unter vermindertem Druck bei 50 bis 60°C getrocknet. Das in einer Menge von 2190 g angefallene Produkt wird gemahlen und durch Sieben auf die Kornfraktionen <80 μm, 80 bis 200 μm und 200 bis 500 μm Korngrösse aufgeteilt. Die Kornfraktion von 80 bis 200 μm Durchmesser des erhaltenen Produktes wird in ein Wirbelbett gefüllt, und in das gewirbelte Pulver wird eine auf 250°C im Heizschrank vorgewärmte Glasflasche von 1 l Inhalt 7 s lang eingetaucht. Das Pulver schmilzt hierbei in Form einer ca. 400 μm dicken Beschichtung auf die Flasche auf. Die zunächst noch etwas trübe und brüchige Schicht ergibt nach einem 15 min dauernden Erhitzen auf 190°C eine glasklare, glatte, feste und elastische Beschichtung, welche auch bei Temperaturen oberhalb 100°C klebfrei ist und eine wesentlich bessere Flexibilität und Zähigkeit sowie eine bessere Haftfestigkeit an Glas besitzt als diejenige Beschichtung, welche unter Verwendung des vernetzerfreien Beschichtungspulvers gleicher Zusammensetzung nach Vergleichsbeispiel 1 erhalten wird.

*Beispiel 2:*

A) *Herstellung des Polyuretoniminvernetzers*

222 g 1-Isocyanatomethyl-5-isocyanato-1,3,4-trimethylcyclohexan (Isophorondiisocyanat) und 0,4 ml eines Gemisches aus 1-Methyl-1-phospha-2-cyclopenten-1-oxid und 1-Methyl-1-phospha-3-cyclopenten-1-oxid werden unter Stickstoff so lange auf 160°C erhitzt, bis innerhalb von 2 h 1 l Kohlendioxid entstanden ist. Das flüssige Produkt wird auf ein Blech gegossen, wo es bei einer Temperatur unterhalb 50°C zu einer leicht pulverisierbaren Masse erstarrt.

Das Produkt schmilzt bei 89°C. Die bei Raumtemperatur durchgeführte Titration der NCO-Gruppe ergab 11 Gew.% und die bei 180°C durchgeführte 17 Gew.%.

B) *Herstellung des Beschichtungspulvers*

Zu der wie unter Beispiel 1 B beschrieben hergestellten Verseifungslösung desselben Ethylen-Vinylacetat-Copolymeren wird die Lösung von 250 g des aus Isophorondiisocyanat nach der obigen Vorschrift hergestellten Uretonimins hinzugefügt und das Produkt wie dort beschrieben in Pulverform isoliert.

Mit der durch Mahlen und Sieben erhaltenen Pulverfraktion von der Korngrösse <80 µm werden gesandstrahlte Stahlbleche nach dem elektrostatischen Pulverbeschichtungsverfahren beschichtet, und die Beschichtung wird bei 190°C 15 min eingebrannt. Man erhält ca. 200 µm starke Beschichtungen, welche im Vergleich zu denen, die mit dem nach Vergleichsbeispiel 1 hergestellten Beschichtungspulver erhalten wurden, eine bessere Temperaturbeständigkeit, einen höheren Glanz, eine bessere Elastizität und Reissfestigkeit und nicht zuletzt eine bessere Haftung zeigen.

*Beispiel 3:*

A) *Herstellung des mit Methanol geblockten Polyuretoniminvernetzers*

Zu einer Lösung von 444 g Isophorondiisocyanat, gelöst in 336 g Xylol, werden unter Stickstoff 0,8 ml 1-Methylphospholinoxid gegeben. Anschliessend wird das Reaktionsgemisch so lange auf 140°C aufgeheizt, bis nach ca. 4 h 28 l Kohlendioxid entstanden sind. Die Menge des Kohlendioxids wird mit einer Gasuhr gemessen. Dann werden bei Raumtemperatur zum Reaktionsgemisch 50 g Methanol und 0,1 g Zinn-di-2-äthylhexoat gegeben. Nach dem Entfernen des Lösungsmittels im Wasserstrahlvakuum erhält man ein zähes Harz, das nach einiger Zeit fest und pulverisierbar wird.

B) *Herstellung des Beschichtungspulvers*

Die Herstellung des Beschichtungspulvers erfolgte nach Beispiel 1, mit dem Unterschied, dass als Vernetzer 500 g der wie unter Abschnitt A dieses Beispiels beschrieben hergestellten Verbindung der Verseifungslösung zugegeben wurde.

Die mit diesem Pulver beschichteten Gegenstände aus Metall und Glas zeigen ähnlich günstige Eigenschaften wie die nach den Beispielen 1 und 2 hergestellten, und verbesserte Eigenschaften im Vergleich zu denen, die mit dem nach Vergleichsbeispiel 1 hergestellten Pulver beschichtet werden.

*Beispiel 4:*

2 kg der Kornfraktion von <80 µm des nach dem Vergleichsbeispiel 1 hergestellten Beschichtungspulvers werden in 20 kg Wasser suspendiert, und die Lösung von 250 g des nach Beispiel 1 hergestellten Polycarbodiimidvernetzers in 1 kg Toluol wird der Suspension zugegeben. Das Toluol wird dann aus der Suspension durch Wasserdampfdestillation bei vermindertem Druck von ca. 50 bis 80 Torr entfernt, das Pulver abfiltriert und im Vakuum bei 60°C getrocknet.

Die Qualität der mit dem Pulver nach dem EPS-Verfahren auf Glas bzw. Metallgegenständen hergestellten Beschichtungen entspricht etwa derjenigen der nach dem Beispiel 1 durch Wirbelsintern hergestellten, wo der Vernetzer in gelöster Form zu der Lösung des Verseifungsproduktes zugesetzt wird.

*Beispiel 5*

2 kg der Kornfraktion von 80 bis 200 µm Durchmesser des nach dem Vergleichsbeispiel 1 hergestellten Beschichtungspulvers werden mit einer Lösung von 500 g des nach Beispiel 3, Abschnitt A, hergestellten Vernetzers mit 2000 g Aceton gleichmässig durchtränkt, und das Produkt wird durch Durchblasen eines trockenen Stickstoffstromes in einem Wirbeltrockner getrocknet. Mit dem Material können nach dem Wirbelsinterverfahren Beschichtungen von ähnlich guter Qualität wie mit den Pulvern, die nach den Beispielen 1 und 3 hergestellt wurden, erziehlt werden.

*Vergleichsbeispiel 1*

Beispiel 1 wurde wiederholt mit dem Unterschied, dass zu der Verseifungslösung kein Vernetzer zugegeben wurde. Die Zusammensetzung des Verseifungsproduktes ist aus Tabelle 1 zu ersehen. Die mit diesem Pulver nach dem Wirbelsinterverfahren bzw. nach dem elektrostatischen Pulverbeschichtungsverfahren hergestellten Beschichtungen waren wesentlich weniger durchsichtig und glänzend als die nach den Beispielen 1 bis 3 hergestellten. Beim Erwärmen des beschichteten Gegenstandes auf Temperaturen oberhalb 100°C wird die Beschichtung weich und klebrig, und nach längerem Erhitzen oberhalb des bei 106°C liegenden Schmelzpunktes ist ein Fliessen des Beschichtungsmaterials zu beobachten.

*Vergleichsbeispiel 2*

A) *Herstellung des mit ε-Caprolactam geblockten Vernetzers*

In 2220 g Isophorondiisocyanat werden bei 80°C im Laufe von 2 h 310 g Äthilenglykol gegeben, das Reaktionsgemisch wird dann noch 1 h auf 100°C erhitzt. Im Laufe von weiteren 2 h werden dann aus einem geheizten Tropftrichter 1120 g ε-Caprolactam zugegeben, und das Reaktionsgemisch wird weitere 4 h auf 100°C erhitzt. Beim Abkühlen erstarrt die Schmilze zu einer festen, leicht pulverisierbaren Masse. Der Schmelzpunkt liegt zwischen 82 und 85°C.

B) *Herstellung des Beschichtungspulvers*

Das Beispiel 1 wurde unter Zusatz von 500 Gewichtsteilen des wie oben beschrieben hergestellten, mit ε-Caprolactam geblockten Vernetzers wiederholt. Die aus diesem Pulver hergestellten Beschichtungen auf Gegenständen aus Metall, Glas oder Keramik besitzen etwa dieselben günstigen Eigenschaften wie diejenigen, welche aus den nach den Beispielen 1 bis 3 erhaltenen Produkten hergestellt worden waren, die während des Einbrennens abgegebene Menge der flüchtigen Bestandteile ist jedoch wesentlich grösser als bei den obengenannten Produkten (Beispiele 1 bis 3).

*Vergleich der Ergebnisse von Beispielen 1 bis 3 und Vergleichsbeispielen 1 und 2*

Über die beim Erhitzen der nach den Beispielen 1 bis 3 und nach den Vergleichsbeispielen 1 und 2 hergestellten Beschichtungspulver auf 200°C im Heizschrank (bei Normaldruck bzw. im Hochvakuum) auftretenden Gewichtsverluste gibt die Tabelle 2 Aufschluss. In dieser Tabelle werden neben den beim Erhitzen durch Wägung der Schicht ermittelten Gewichtsverlusten auch die auf die im Produkt enthaltene Vernetzermenge bezogenen Gewichtsverluste in Gewichtsprozenten angegeben. Die Berechnung dieser Werte erfolgte unter Berücksichtigung der unter den Versuchsbedingungen eintretenden geringen Gewichtsveränderungen des vernetzerfreien Materials (Vergleichsbeispiel 1). Die Berechnung des auf den Vernetzer bezogenen Gewichtsverlustes erfolgte nach der nachfolgenden Formel

$$V = 100\ \frac{100 \cdot a \cdot (c-d) - (a-b) \cdot c \cdot (100-x)}{a \cdot c \cdot x}$$

wobei
V = Gewichtsverlust des im Pulver enthaltenen Vernetzers,
a = Gewicht des zu vernetzenden Produktes vor dem Erhitzen,
b = Gewicht des zu vernetzenden Produktes nach dem Erhitzen,
c = Gewicht des vernetzerhaltigen Produktes vor dem Erhitzen,
d = Gewicht des vernetzerhaltigen Produktes nach dem Erhitzen,
x = Gehalt des vernetzerhaltigen Produktes an Vernetzer in Gewichtsprozent
bedeutet.

*Tabelle 1:* Zusammensetzung und Eigenschaften der Beschichtungspulver

| | Beispiel Nr. | | | Vergleichsbeispiel | |
|---|---|---|---|---|---|
| | 1 | 2 | 3 | 1 | 2 |
| A) Eingesetztes Ethylen-Vinyl-acetat-Copolymer (g) | 2500 | 2500 | 2500 | 2500 | 2500 |
| Vinylacetatgehalt (Gew.%) | 32,0 | 32,0 | 32,0 | 32,0 | 32,0 |
| Schmelzindex gemessen nach DIN 53 735 bei 150°C und 2,16 kg Belastung (g/10') | 20,0 | 20,0 | 20,0 | 20,0 | 20,0 |
| B) Verseifungsprodukt (g) | 2145 | 2129 | 2131 | 2129 | 2129 |
| Zusammensetzung: | | | | | |
| Äthylen (Gew.%) | 79,3 | 80,0 | 79,8 | 80,0 | 80,0 |
| Vinylacetat (Gew.%) | 3,5 | 1,7 | 2,1 | 1,7 | 1,7 |
| Vinylalkohol (Gew.%) | 17,2 | 18,3 | 18,1 | 18,3 | 18,3 |
| Hydrolysegrad (%) | 90,6 | 94,7 | 94,4 | 94,7 | 94,7 |
| C) Vernetzer | | | | | |
| Basis | IPDI | IPDI | IPDI | — | IPDI |
| Typ | Polycarbo-diimid | Polyureton-imin | Polyureton-imin | — | Diiso-cyanat |
| Verlängerungsmittel | — | — | — | — | Äthylen-glykol |
| Blockmittel | Methanol | Methanol | Methanol | — | ε-Capro-lactam |
| Isocyanatgruppengehalt vor dem Einsatz bestimmt bei | | | | | |
| Raumtemperatur (Gew.%) | — | 11 | — | — | 0,3 |
| 180°C (Gew.%) | — | 17 | 10 | — | 5,5 |
| Eingesetzte Menge des Vernetzers (g) | 250 | 250 | 500 | — | 500 |
| D) Beschichtungspulver | | | | | |
| Zusammensetzung: | | | | | |
| Verseifungsprodukt (Gew.%) | 89,6 | 89,5 | 81,0 | 100 | 80,0 |
| Vernetzer (Gew.%) | 10,4 | 10,5 | 19,0 | — | 20,0 |

*Tabelle 2:* Thermogravimetrie der Beschichtungspulver bei 200°C

| | Beispiel Nr. | | | Vergleichsbeispiel | |
|---|---|---|---|---|---|
| | 1 | 2 | 3 | 1 | 2 |
| A) Gewichtsverlust des Beschichtungspulvers bei 200°C | | | | | |
| 1) Im Heizschrank bei Normaldruck | | | | | |
| nach 15 min (Gew.%) | 0,18 | 0,26 | 0,33 | 0,12 | 0,77 |
| nach 30 min | 0,35 | 0,53 | 0,75 | 0,12 | 1,54 |
| nach 45 min | 0,50 | 0,75 | 1,11 | 0,13 | 2,16 |
| nach 60 min | 0,50 | 0,76 | 1,11 | 0,13 | 2,16 |
| 2) Im Heizschrank bei 0,1 mm Hg Druck | | | | | |
| nach 15 min (Gew.%) | 0,37 | 1,23 | 0,50 | 0,18 | 4,73 |
| nach 30 min | 0,60 | 1,30 | 0,73 | 0,22 | 5,74 |
| nach 45 min | 0,67 | 1,53 | 0,90 | 0,22 | 6,20 |
| nach 60 min | 0,79 | 1,73 | 1,06 | 0,25 | 6,57 |
| nach 75 min | 0,87 | 1,88 | 1,22 | 0,31 | 6,96 |
| nach 90 min | 1,15 | 2,15 | 1,51 | 0,31 | 7,11 |
| B) Gewichtsverlust des Beschichtungspulvers bei 200°C bezogen auf den darin enthaltenen Vernetzer | | | | | |
| 1) Im Heizschrank bei Normaldruck | | | | | |
| nach 15 min (Gew.%) | 0,74 | 1.52 | 1,22 | — | 3,38 |
| nach 30 min | 2,27 | 4,04 | 3,43 | — | 7,22 |
| nach 45 min | 3,55 | 6,04 | 5,25 | — | 10,26 |
| nach 65 min | 3,55 | 6,08 | 5,26 | — | 10,27 |
| 2) Im Heizschrank bei 0,1 mm Hg Druck | | | | | |
| nach 15 min (Gew.%) | 2,00 | 10,16 | 1,90 | — | 22,92 |
| nach 30 min | 3,85 | 10,52 | 2,91 | — | 27,84 |
| nach 45 min | 4,54 | 12,64 | 3,78 | — | 30,12 |
| nach 60 min | 5,42 | 14,34 | 4,50 | — | 31,87 |
| nach 75 min | 6,53 | 16,12 | 5,52 | — | 33,95 |
| nach 90 min | 8,37 | 17,83 | 6,59 | — | 34,28 |

**Patentansprüche**

1. Pulverförmige, bei 60 bis 150°C schmelzende Beschichtungsmaterialien, bestehend aus

a) 50 bis 99 Gew.% von verseiften Ethylen-Vinylacetat-Copolymeren, welche vor der Verseifung Ethylen und Vinylacetat in Molverhältnissen von 2:1 bis 20:1 enthalten und welche bis zu Hydrolysegraden von 50 bis 100% verseift sind, und

b) 1 bis 50 Gew.% von oberhalb 130°C vernetzend wirkenden Polycarbodiimiden der allgemeinen Formel 1

$$A - R - [N = C = N - R]_x - A \quad (1)$$

in der R eine gegebenenfalls substituierte Alkylen-, Cycloalkylen-, Aralkylen- oder Arylengruppe,

A Wasserstoff oder eine geblockte Isocyanatgruppe mit Abspalttemperaturen von mehr als 130°C, und

x eine ganze Zahl von 2 bis 20 bedeutet

und/oder Polyuretoniminen, die durch Umsetzung der Polycarbodiimide der Formel 1 mit (Cyclo)aliphatischen, araliphatischen oder aromatischen Di- und/oder Triisocyanaten erhalten werden unter Verknüpfung der Polycarbodiimidmoleküle entsprechend den allgemeinen Formeln 2 und 3

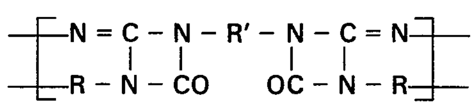

(2)

bzw.

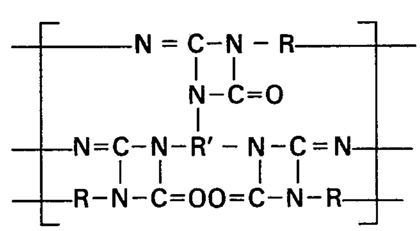

(3)

in denen R' einen zwei- oder dreiwertigen organischen Rest bedeutet, wobei die Summe der Komponenten a) und b) 100 Gew.% beträgt.

2. Beschichtungsmaterialien gemäss Anspruch 1, in denen die Komponenten a) vor der Verseifung Ethylen und Vinylacetat in Molverhältnissen von 4 : 1 bis 10 : 1 enthält.

3. Beschichtungsmaterialien gemäss Anspruch 1, in denen A in Komponenten b) eine geblockte Isocyanatgruppe mit Abspalttemperaturen von mehr als 180°C ist.

4. Beschichtungsmaterialien gemäss Anspruch 1, in denen R in Komponent b) eine gegebenenfalls substituierte Cycloalkylengruppe ist.

5. Verwendung der Beschichtungsmaterialien gemäss Anspruch 1 bis 4 zur Beschichtung von Gegenständen aus Metall, Keramik, Glas oder Holz durch Tauch- oder Spritzbeschichtung.

6. Verwendung der Beschichtungsmaterialien gemäss Anspruch 5, dadurch gekennzeichnet, dass sie auf den zu beschichtenden Gegenstand durch Wirbelsintern oder elektrostatisches Pulversprühen aufgebracht und bei 60 bis 150°C aufgeschmolzen und anschliessend bei 150 bis 220°C eingebrannt werden.

## Claims

1. Pulverulent coating materials melting at from 60 to 150°C, consisting of

a) from 50 to 99% by weight of saponified ethylene-vinyl acetate copolymers, which contain ethylene and vinyl acetate in molar ratios of from 2:1 to 20:1 before saponification and which are saponified to hydrolysis levels of from 50 to 100%, and

b) from 1 to 50% by weight of polycarbodiimides, having cross-linking activity above 130°C, of the general formula (1):

$$A - R - [-N = C = N - R]_x - A \quad (1)$$

wherein

R represents an optionally substituted alkylene, cycloalkylene, aralkylene or arylene group,

A represents hydrogen or a blocked isocyanate group having dissociation temperatures of above 130°C, and

x represents an integer from 2 to 20

and/or polyuretones imines, which are obtained by reacting the polycarbodiimides of formula (1) with (cyclo)aliphatic, araliphatic or aromatic di- and/or triisocyanates thereby linking the polycarbodiimide molecules according to the general formulae (2) and (3):

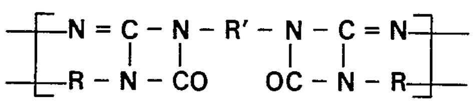

(2)

or

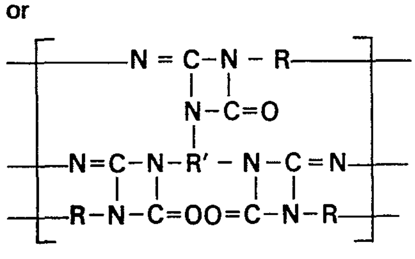

(3)

wherein R' represents a bi- or trifunctional organic radical whereby the total of components a and b amounts to 100% by weight.

2. Coating materials according to claim 1, in which component a contains ethylene and vinyl acetate in molar ratios of from 4:1 to 10:1 before saponification.

3. Coating materials according to claim 1, in which A in component b is a blocked isocyanate group having dissociation temperatures of above 180°C.

4. Coating materials according to claim 1, in which R in component b is an optionally substituted cycloalkylene group.

5. The use of the coating materials according to claims 1 to 4 for coating articles made of metal, ceramics, glass or wood by means of immersion or spray coating.

6. The use of the coating materials according to claim 5, characterized in that they are applied onto the object to be coated by means of whirl sintering or electrostatic powder spraying and are melted on at from 60 to 150°C and then stoved at from 150 to 220°C.

## Revendications

1. Matières de revêtement en poudre fondant à 60-150°C, composées de

a) 50 à 99% en poids de copolymères éthylène-acétate de vinyle saponifiés, qui contiennent avant la saponification de l'éthylène et de l'acétate de vinyle dans des rapports molaires de 2 : 1 à 20 : 1 et qui sont saponifiés jusqu'à des degrés d'hydrolyse de 50 à 100%, et

b) 1 à 50% en poids de polycarbodiimides à action réticulante au-dessus de 130°C, de formule générale 1:

$$A - R - [-N = C = N - R]_x - A \quad (1)$$

dans laquelle

R est un groupe alkylène, cycloalkylène, aralkylène ou arylène éventuellement substitué,

A est de l'hydrogène ou un groupe isocyanate protégé, avec des températures de libération de plus de 130°C, et

x est un nombre entier de 2 à 20

et/ou de polyurétone-imines, qui sont obtenues par réaction des polycarbodiimides de formule (1) avec des di- et/ou des triisocyanates (cyclo)aliphatiques, araliphatiques ou aromatiques, avec liaison des molécules de polycarbodiimide conformément aux formules générales (2) et (3):

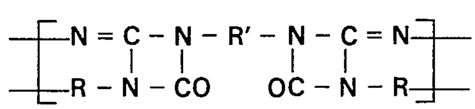

(2)

ou

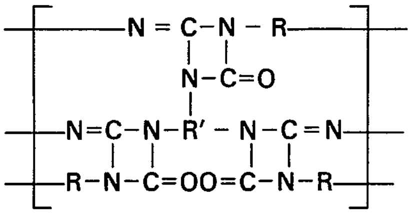

(3)

dans lesquelles R' désigne un reste organique divalent ou trivalent, la somme des composants a et b s'élevant à 100% en poids.

2. Matières de revêtement suivant la revendication 1, dans lesquelles le composant a contient, avant la saponification, de l'éthylène et de l'acétate de vinyle dans des rapports molaires de 4:1 à 10:1.

3. Matières de revêtement suivant la revendication 1, dans lesquelles A dans le composant b est un groupe isocyanate protégé dont les températures de libération dépassent 180° C.

4. Matières de revêtement suivant la revendication 1, dans lesquelles R dans le composant b est un groupe cycloalkylène éventuellement substitué.

5. Utilisation des matières de revêtement suivant les revendications 1 à 4 pour l'enduction d'objets en métal, céramique, verre ou bois par application par immersion ou pulvérisation.

6. Utilisation des matières de revêtement suivant la revendication 5, caractérisée en ce qu'on les applique sur l'objet à enduire par concrétion tourbillonnaire ou par projection électrostatique de poudre, qu'on les fait fondre à 60-150°C puis les soumet à la cuisson à 150-220°C.